# EUROPEAN PATENT APPLICATION

(11) **EP 3 179 397 A1**
(43) Date of publication of application: **14.06.2017**
(21) Application number: 16203249.4
(22) Date of filing: 09.12.2016
(51) Int. Cl.: G06F 21/31, G06F 21/41, H04L 29/06, H04W 12/06

(54) **METHODS AND DEVICES FOR MANAGING AUTOMATIC PARALLEL LOGIN AND LOGOUT IN SEVERAL APPLICATIONS**

(30) Priority: 10.12.2015 CN 201510920254
(71) Applicant: Xiaomi Inc., Beijing 100085 (CN)
(72) Inventor: GAO, Yi, Beijing 100085 (CN); WANG, Hongqiang, Beijing 100085 (CN); GE, Yunyuan, Beijing 100085 (CN)
(74) Representative: Delumeau, François Guy

(57) **Abstract**

The present invention relates to a method and a device for managing accounts. The method includes: receiving (101) a first logout request to log out a plurality of target accounts corresponding to at least one target application; and for each target application, sending (102) a second logout request which carries information of the target accounts associated with this target application to a target application server corresponding to the target application, for the target application server to log out the target accounts according to the information of the target accounts. The present invention can allow to quickly logging out a plurality of target accounts, saving time for users and improving user experience.

## Description

### TECHNICAL FIELD

The present invention generally relates to the field of communication technology, and more particularly, to methods and devices for managing accounts.

### BACKGROUND ART

Nowadays users log in their accounts for an application through smart devices such as mobile phones, and information of these accounts are stored in the corresponding application. When a user needs to lend his mobile phone to others, since the user generally does not want others to log in the user's own account for an application or check stored information of the user's account, the user needs to log out his account which is currently logged in. If the user has currently logged in more than one account which can correspond to one or more application, the user needs to log out his accounts one by one, and delete stored information of his accounts piece by piece. This can be very time consuming and thus can provide poor user experience.

### SUMMARY

In view of the above, the present invention provides methods and devices for managing accounts, to solve the problem in the related art that the accounts have to be logged out one by one, causing poor user experience.

According to a first aspect of embodiments, the invention relates to a method for managing accounts, including the followings steps:
receiving a first logout request to log out a plurality of target accounts corresponding to at least one target application; and
for each target application, sending a second logout request which carries information of the target accounts associated with this target application to a target application server corresponding to the target application, for the target application server to log out the target accounts according to the information of the target accounts.

In a particular embodiment, the step of receiving a first logout request to log out a plurality of target accounts includes:
for each target application, detecting that a first application logout request to log out the target application is input in a logout interface of the target application; and
informing an account-managing module of the target accounts corresponding to the first application logout request, the account-managing module being configured to manage login states and logout states of accounts for the corresponding application.

In a particular embodiment, the step of receiving a first logout request to log out a plurality of target accounts includes:
for each target application, receiving a first account logout request input in a logout interface corresponding to an account-managing module, the account-managing module being configured to manage login states and logout states of accounts for the target application.

In a particular embodiment, receiving an account logout request input in a logout interface corresponding to an account-managing module includes:
receiving a first list logout request by detecting that one or more target accounts are selected from an account information list of the account-managing module, the account information list containing previously recorded information of all logged-in accounts.

In a particular embodiment, the method further includes:
the account-managing module encrypting and storing the information of accounts for an application which is managed by the account-managing module.

In a particular embodiment, the step of sending a second logout request which carries information of the target accounts associated with the target application to a target application server corresponding to the target application includes:
the account-managing module acquiring a target Uniform Resource Locator (URL) address of the target application server corresponding to the target application from the information of the target accounts; and
the account-managing module sending the second logout request which carries the information of the target accounts associated with the target application to the target application server according to the target URL address.

In a particular embodiment, the method further includes:
upon receiving from the target application server a message of successfully logging out the target accounts, modifying logging states of the target accounts as logout.

A logging state of an account can correspond to a connection state or a connection status of said account.

For example, a logging state of an account can be either "login" if said account is logged in or "logout" if the account is logged out. In the first case, the account is considered to be "in a login state" whereas in the second case, the account is considered to be "in a logout state".

In a particular embodiment, the method further includes:
upon receiving from the target application server a message of successfully logging out the target accounts, deleting the information of the target accounts stored in the target application.

In a particular embodiment, the method further includes:
upon receiving a login request to log in an application, the account-managing module sending the login request to the application server corresponding to the application, for the application server to verify the information of the target account and log in the application according to the login request.

In a particular embodiment, the method further includes:
the account-managing module recording information of an account logging in the application, the information of the account at least containing a logging state of the account.

According to a second aspect of embodiments, the invention relates to a method for managing accounts, including the followings steps:
receiving a login request to log in a target application; and
sending the login request to a target application server corresponding to the target application, for the target application server to verify the information of the target account and log in the target application according to the login request.

In a particular embodiment, the step of receiving a login request to log in a target account to a target application includes:
detecting that an application login request to log in a target application is input in a logging interface of the target application; and
informing an account-managing module of a target account corresponding to the application login request, the account-managing module being configured to manage login states and logout states of accounts for the corresponding application.

In a particular embodiment, the step of sending the login request to a target application server corresponding to the target application includes:
the account-managing module acquiring a target URL address of the target application server corresponding to the target application from information of the target account; and
the account-managing module sending the login request which carries the information of the target account to the target application server according to the target URL address.

In a particular embodiment, the method further includes:
the account-managing module recording information of an account logging in the application, the information of the account at least containing a logging state of the account.

In a particular embodiment, the method further includes:
the account-managing module encrypting and storing the information of accounts for an application which is managed by the account-managing module.

In a particular embodiment, the method further includes:
upon receiving from the target application server a message of successfully logging in the target account, modifying the logging state of the target account as login.

According to a third aspect of embodiments of the present invention, there is provided a method for managing accounts, including the followings steps:
receiving a third logout request to log out a target account of a target application; and
sending a fourth logout request which carries information of the target account to a target application server corresponding to the target application, for the target application server to log out the target account according to the information of the target account.

In a particular embodiment, the step of receiving a third logout request to log out a target account of a target application includes:
detecting that a third application logout request to log out the target application is input in a logout interface of the target application; and
informing an account-managing module of the target account corresponding to the third application logout request, the account-managing module being configured to manage login states and logout states of accounts for the corresponding application.

In a particular embodiment, the step of sending a fourth logout request which carries information of the target account to a target application server corresponding to the target application includes:
the account-managing module acquiring a target URL address of the target application server corresponding to the target application from the information of the target account; and
the account-managing module sending the fourth logout request which carries information of the target account to the target application server according to the target URL address.

In a particular embodiment, the method further includes:
upon receiving from the target application server a message of successfully logging out the target account, modifying a logging state of the target account as logout.

In a particular embodiment, the method further includes:
upon receiving from the target application server a message of successfully logging out the target account, deleting the information of the target account stored in the target application.

According to a fourth aspect of embodiments, the invention relates to a device for managing accounts, including:
a first receiving module configured to receive a first logout request to log out a plurality of target accounts corresponding to at least one target application; and
a first sending module configured to, for each target application, send a second logout request which carries information of the target accounts associated with this target application to a target application server corresponding to the target application, for the target application server to log out the target accounts according to the information of the target accounts.

In a particular embodiment, the first receiving module includes:
a first detecting sub-module configured to, for each target application, detect that a first application logout request to log out the target application is input in a logout interface of the target application; and
a first sending sub-module configured to inform an account-managing module of the target accounts corresponding to the first application logout request, the account-managing module being configured to manage login states and logout states of accounts for the corresponding application.

In a particular embodiment, the first receiving module includes:
a first receiving sub-module configured to, for each target application, receive a first account logout request input in a logout interface corresponding to an account-managing module, the account-managing module being configured to manage login states and logout states of accounts for the corresponding application.

In a particular embodiment, the first receiving sub-module includes:
a receiving unit configured to receive a first list logout request by detecting that one or more target accounts are selected from an account information list of the account-managing module, the account information list containing previously recorded information of all logged-in accounts.

In a particular embodiment, the device further includes:
a first encrypting module configured for the account-managing module to encrypt and store the information of accounts for an application which is managed by the account-managing module.

In a particular embodiment, the first sending module includes:
a first acquiring sub-module configured for the account-managing module to acquire a target URL address of the target application server corresponding to the target application from the information of the target accounts; and
a second sending sub-module configured for the account-managing module to send the second logout request which carries the information of the target accounts to the target application server according to the target URL address.

In a particular embodiment, the device further includes:
a first modifying module configured to, upon receiving from the target application server a message of successfully logging out the target accounts, modify logging states of the target accounts as logout.

In a particular embodiment, the device further includes:
a first deleting module configured to, upon receiving from the target application server a message of successfully logging out the target accounts, delete the information of the target accounts stored in the target application.

In a particular embodiment, the device further includes:
a second sending module configured for the account-managing module, upon receiving a login request to log in an application, to send the login request to the application server corresponding to the application, for the application server to verify the information of the target account and log in the application according to the login request.

In a particular embodiment, the device further includes:
a first recording module configured for the account-managing module to record information of an account logging in the application, the information of the account at least containing a logging state of the account.

According to a fifth aspect of embodiments, the invention relates to a device for managing accounts, including:
a second receiving module configured to receive a login request to log in a target application; and
a third sending module configured to send the login request to a target application server corresponding to the target application, for the target application server to verify the information of the target account and log in the target application according to the login request.

In a particular embodiment, the second receiving module includes:
a second detecting sub-module configured to detect that an application login request to log in a target application is input in a logging interface of the target application; and
a third sending sub-module configured to inform an account-managing module of a target account corresponding to the application login request, the account-managing module being configured to manage login states and logout states of accounts for the corresponding application.

In a particular embodiment, the third sending module includes:
a second acquiring sub-module configured for the account-managing module to acquire a target URL address of the target application server corresponding to the target application from information of the target account; and
a fourth sending sub-module configured for the account-managing module to send the login request which carries the information of the target account to the target application server according to the target URL address.

In a particular embodiment, the device further includes:
a second recording module configured for the account-managing module to record information of an account logging in the application, the information of the account at least containing a logging state of the account.

In a particular embodiment, the device further includes:
a second encrypting module configured for the account-managing module to encrypt and store the information of accounts for an application which is managed by the account-managing module.

In a particular embodiment, the device further includes:
a second modifying module configured to, upon receiving from the target application server a message of successfully logging in the target account, modify the logging state of the target account as login.

According to a sixth aspect of embodiments, the invention relates to a device for managing accounts, including:
a third receiving module configured to receive a third logout request to log out a target account of a target application; and
a fourth sending module configured to send a fourth logout request which carries information of the target account to a target application server corresponding to the target application, for the target application server to log out the target account according to the information of the target account.

In a particular embodiment, the third receiving module includes:
a third detecting sub-module configured to detect that a third logout request to log out the target application is input in a logout interface of the target application; and
a fifth sending sub-module configured to inform an account-managing module of the target account corresponding to the third logout request, the account-managing module being configured to manage login states and logout states of accounts for the corresponding application.

In a particular embodiment, the fourth sending module includes:
a third acquiring sub-module configured for the account-managing module to acquire a target URL address of the target application server corresponding to the target application from the information of the target account; and
a sixth sending sub-module configured for the account-managing module to send the fourth logout request which carries information of the target account to the target application server according to the target URL address.

In a particular embodiment, the device further includes:
a third modifying module configured to, upon receiving from the target application server a message of successfully logging out the target account, modify a logging state of the target account as logout.

In a particular embodiment, the device further includes:
a second deleting module configured to, upon receiving from the target application server a message of successfully logging out the target account, delete the information of the target account stored in the target application.

According to a seventh aspect of embodiments, the invention relates to a device for managing accounts, including:
a processor; and
a memory for storing instructions executable by the processor;
wherein the processor is configured to perform:
receiving a first logout request to log out a plurality of target accounts corresponding to at least one target application; and
for each target application, sending a second logout request which carries information of the target accounts associated with this target application to a target application server corresponding to the target application, for the target application server to log out the target accounts according to the information of the target accounts.

According to an eighth aspect of embodiments, the invention relates to a device for managing accounts, including:
a processor; and
a memory for storing instructions executable by the processor;
wherein the processor is configured to perform:
receiving a login request to log in a target application; and
sending the login request to a target application server corresponding to the target application, for the target application server to verify the information of the target account and log in the target application according to the login request.

According to a ninth aspect of embodiments the invention relates to a device for managing accounts, including:
a processor; and
a memory for storing instructions executable by the processor;
wherein the processor is configured to perform:
receiving a third logout request to log out a target account of a target application; and
sending a fourth logout request which carries information of the target account to a target application server corresponding to the target application, for the target application server to log out the target account according to the information of the target account.

The technical solution according to embodiments of the present invention may have the following beneficial effects.

In the embodiment of the present invention, after a first logout request to log out a plurality of target accounts is received, the terminal sends a second logout request which carries information of the target accounts associated with the target application to a target application server corresponding to the target application, for the target application server to log out the target accounts according to the information of the target accounts. The above process can quickly log out a plurality of target accounts, saving time for users and improving user experience.

In the embodiment of the present invention, when the terminal detects a first application logout request in the logout interface of the target application, the terminal informs the account-managing module of the target accounts corresponding to the first logout request, the account-managing module being configured to manage login states and logout states of the accounts of the corresponding application. Thereby, it can effectively manage the information of the accounts on the terminal.

In the embodiment of the present invention, the terminal can also directly detect whether a first accountlogout request is input in the logout interface corresponding to the account-managing module, similarly, the account-managing module being configured to manage login states and logout states of the accounts of the corresponding application. Thereby, it can effectively manage the information of the accounts on the terminal. In the embodiment of the present invention, the terminal can automatically acquire a target URL address of the corresponding target application server from the acquired information of the target accounts. Then, the terminal can send a second logout request which carries information of the target accounts to a corresponding target application server according to the target URL address. The above process is convenient and fast to log out a plurality of target accounts, and thus can provide excellent user experience.

In the embodiment of the present invention, when it is received from the target application server a message of successfully logging out the target accounts, the terminal can automatically modify the logging states of the target accounts as logout, or can delete the information of the target accounts stored in the target application. It can save time for the user and improve the user experience.

In the embodiment of the present invention, the account-managing module maintains information of all accounts for either logging in or logging out a single account. Thereby, it can improve the efficiency of account management, saving time for quickly logging out a plurality of accounts, and improving the user experience.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart illustrating a method for managing accounts according to an exemplary embodiment of the present invention;
Fig. 2 is a flow chart illustrating another method for managing accounts according to an exemplary embodiment of the present invention;
Fig. 3 is a flow chart illustrating another method for managing accounts according to an exemplary embodiment of the present invention;
Fig. 4 is a flow chart illustrating another method for managing accounts according to an exemplary embodiment of the present invention;
Fig. 5 is a flow chart illustrating another method for managing accounts according to an exemplary embodiment of the present invention;
Fig. 6 is a flow chart illustrating another method for managing accounts according to an exemplary embodiment of the present invention;
Fig. 7 is a flow chart illustrating another method for managing accounts according to an exemplary embodiment of the present invention;
Fig. 8 is a schematic diagram illustrating a scenario for managing accounts according to an exemplary embodiment of the present invention;
Fig. 9 is a flow chart illustrating another method for managing accounts according to an exemplary embodiment of the present invention;
Figs. 10A to 10B are schematic diagrams illustrating scenarios of managing accounts according to an exemplary embodiment of the present invention;
Fig. 11 is a flow chart illustrating another method for managing accounts according to an exemplary embodiment of the present invention;
Fig. 12 is a flow chart illustrating another method for managing accounts according to an exemplary embodiment of the present invention;
Fig. 13 is a flow chart illustrating another method for managing accounts according to an exemplary embodiment of the present invention;
Fig. 14 is a flow chart illustrating another method for managing accounts according to an exemplary embodiment of the present invention;
Fig. 15 is a flow chart illustrating another method for managing accounts according to an exemplary embodiment of the present invention;
Fig. 16 is a flow chart illustrating another method for managing accounts according to an exemplary embodiment of the present invention;
Fig. 17 is a flow chart illustrating another method for managing accounts according to an exemplary embodiment of the present invention;
Fig. 18 is a flow chart illustrating another method for managing accounts according to an exemplary embodiment of the present invention;
Fig. 19 is a flow chart illustrating another method for managing accounts according to an exemplary embodiment of the present invention;
Fig. 20 is a flow chart illustrating another method for managing accounts according to an exemplary embodiment of the present invention;
Fig. 21 is a flow chart illustrating another method for managing accounts according to an exemplary embodiment of the present invention;
Fig. 22 is a flow chart illustrating another method for managing accounts according to an exemplary embodiment of the present invention;
Fig. 23 is a flow chart illustrating another method for managing accounts according to an exemplary embodiment of the present invention;
Fig. 24 is a block diagram illustrating a device for managing accounts according to an exemplary embodiment of the present invention;
Fig. 25 is a block diagram illustrating another device for managing accounts according to an exemplary embodiment of the present invention;
Fig. 26 is a block diagram illustrating another device for managing accounts according to an exemplary embodiment of the present invention;
Fig. 27 is a block diagram illustrating another device for managing accounts according to an exemplary embodiment of the present invention;
Fig. 28 is a block diagram illustrating another device for managing accounts according to an exemplary embodiment of the present invention;
Fig. 29 is a block diagram illustrating another device for managing accounts according to an exemplary embodiment of the present invention;
Fig. 30 is a block diagram illustrating another device for managing accounts according to an exemplary embodiment of the present invention;
Fig. 31 is a block diagram illustrating another device for managing accounts according to an exemplary embodiment of the present invention;
Fig. 32 is a block diagram illustrating another device for managing accounts according to an exemplary embodiment of the present invention;
Fig. 33 is a block diagram illustrating another device for managing accounts according to an exemplary embodiment of the present invention;
Fig. 34 is a block diagram illustrating another device for managing accounts according to an exemplary embodiment of the present invention;
Fig. 35 is a block diagram illustrating another device for managing accounts according to an exemplary embodiment of the present invention;
Fig. 36 is a block diagram illustrating another device for managing accounts according to an exemplary embodiment of the present invention;
Fig. 37 is a block diagram illustrating another device for managing accounts according to an exemplary embodiment of the present invention;
Fig. 38 is a block diagram illustrating another device for managing accounts according to an exemplary embodiment of the present invention;
Fig. 39 is a block diagram illustrating another device for managing accounts according to an exemplary embodiment of the present invention;
Fig. 40 is a block diagram illustrating another device for managing accounts according to an exemplary embodiment of the present invention;
Fig. 41 is a block diagram illustrating another device for managing accounts according to an exemplary embodiment of the present invention;
Fig. 42 is a block diagram illustrating another device for managing accounts according to an exemplary embodiment of the present invention;
Fig. 43 is a block diagram illustrating another device for managing accounts according to an exemplary embodiment of the present invention;
Fig. 44 is a block diagram illustrating another device for managing accounts according to an exemplary embodiment of the present invention; and
Fig. 45 is a block diagram illustrating a device for managing accounts according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

The terms used herein are merely for describing a particular embodiment, rather than limiting the present invention. As used in the present invention and the appended claims, terms in singular forms such as "a", "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present invention, a first element can also be referred to as a second element. Similarly, a second element can also be referred to as a first element. Depending on the context, a term "if" as used herein can be interpreted as "when", "where" or "in response to".

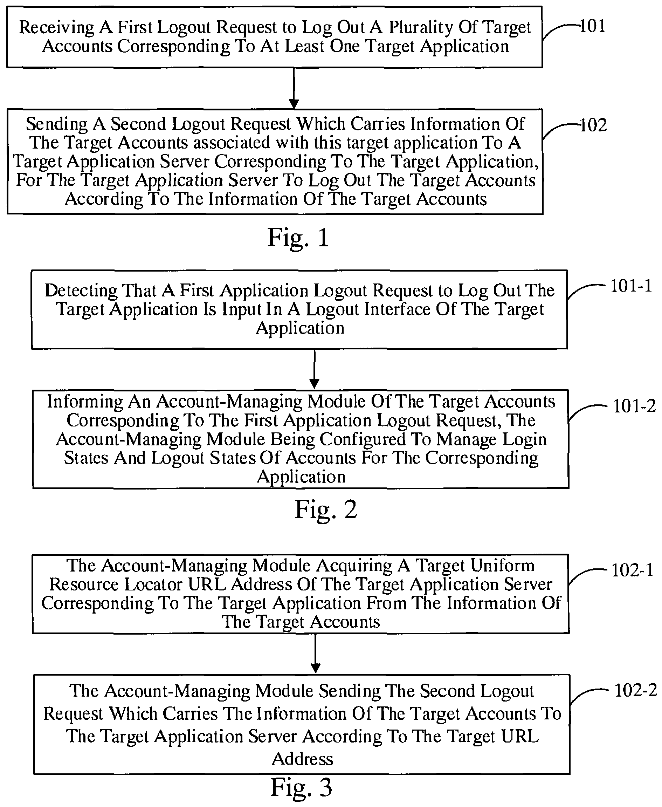

Fig. 1 is a flow chart illustrating a method for managing accounts according to an exemplary embodiment, which can be applied in a terminal. As shown in Fig. 1, the method includes the following steps.

At step 101, a first logout request to log out a plurality of target accounts corresponding to at least one target application is received.

In the embodiment of the present invention, the terminal can be any smart terminal equipped with a camera to capture pictures or videos, such as a smart mobile phone, a tablet computer, a Personal Digital Assistant (PDA) and the like.

At this step, the first logout request can be received through any of the following two manners.

In the first case, the first logout request is received through a logout interface of the target application.

In this particular embodiment, as shown in Fig. 2 which is a flow chart illustrating another method for managing accounts based on the embodiment shown in Fig. 1, step 101 can include the following substeps.

At substep 101-1, for each target application, it is detected that a first application logout request to log out the target application is input in a logout interface of the target application.

At this substep, after the terminal has logged in the target account of the target application, it can be detected whether the first application logout request is received through the logout interface corresponding to the target application. In a particular embodiment, it can be detected whether a button to log out in the logout interface of the target application is selected. If the button to log out is selected, it can be determined that the first application logout request is detected.

At substep 101-2, an account-managing module is informed about the target accounts corresponding to the first application logout request, the account-managing module being configured to manage login states and logout states of accounts for the corresponding application.

In the embodiment of the present invention, the account-managing module is configured to manage the login states and logout states of accounts for the corresponding application. Upon detecting the first application logout request, the terminal can inform the account-managing module about the target accounts which are currently logged in the target application.

In the second case, the first logout request is received through a logout interface corresponding to the account-managing module.

In this particular embodiment, step 101 can include the following substep.

At substep 101-1', for each target application, a first account logout request input in a logout interface corresponding to an account-managing module is received, the account-managing module being configured to manage login states and logout states of accounts for the corresponding application.

At this substep, the terminal can detect whether the first account logout request is input in the logout interface corresponding to the account-managing module.

In a particular embodiment, the account-managing module can output an account information list, and the account information list contains information of all logged-in accounts which are recorded previously. The user can select one or more target accounts to be logged out in the account information list. After the user selects the target accounts, in a particular embodiment, the user can click a button to log out in the logout interface corresponding to the account-managing module. Then, the terminal can determine that the first logout request is received.

In the embodiment of the present invention, the account-managing module maintains information of all of the accounts. In order to ensure security of the information of the accounts, in a particular embodiment, the account-managing module can encrypt and store the information of accounts for an application which is managed by the account-managing module.

At step 102, for each target application, a second logout request which carries information of the target accounts associated with this target application is sent to a target application server corresponding to the target application, for the target application server to log out the target accounts according to the information of the target accounts.

In a particular embodiment, information of an account can include at least: a name of an application, a name of the account, a password to log in, an URL address of an application server and a logging state (loggin or logout). After the terminal is previously logged in the target account, the terminal recorded information of the target account in the account-managing module, for the account-managing module to manage login states and logout states of accounts for the application.

At this step, the account-managing module sends the second logout request to the target application server corresponding to the target application.

Here, as shown in Fig. 3 which is a flow chart illustrating another method for managing accounts based on the embodiment shown in Fig. 1, step 102 can include the following substeps.

At substep 102-1, the account-managing module acquires a target URL address of the target application server corresponding to the target application from the information of the target accounts.

Since the account-managing module previously recorded information of the target accounts, at this time, the account-managing module can acquire the target URL address of the corresponding target application server from the information of the target accounts.

At substep 102-2, the account-managing module sends the second logout request which carries the information of the target accounts to the target application server according to the target URL address.

At this substep, the account-managing module can send the second logout request which carries information of the target accounts to the target application server according to the acquired target URL address, for the target application server to log out the corresponding target accounts according to the information of the target accounts

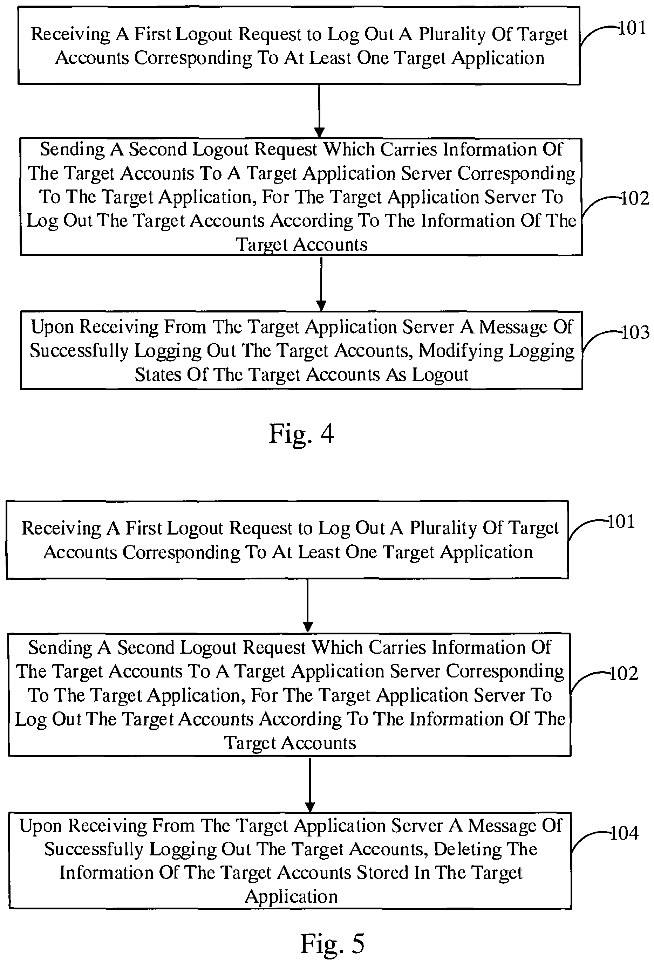

In the embodiment of the present invention, as shown in Fig. 4 which is a flow chart illustrating another method for managing accounts based on the embodiment shown in Fig. 1, the method can include the following steps.

At step 103, upon receiving from the target application server a message of successfully logging out the target accounts, logging states of the target accounts are modified as logout.

At this step, after the target application server successfully logs out the target accounts according to the received information of the target accounts, the target application server can return a message of successful logout the target accounts to the terminal. Then, the terminal can modify the recorded logging states in the information of the target accounts as logout. In this way, the account-managing module can manage in real time of the information of the target accounts.

In the embodiment of the present invention, as shown in Fig. 5 which is a flow chart illustrating another method for managing accounts based on the embodiment shown in Fig. 1, the method for managing accounts can include the following steps.

At step 104, upon receiving from the target application server a message of successfully logging out the target accounts, the information of the target accounts stored in the target application is deleted.

At this step, after the terminal receives from the target application server a message of successfully logging out the target accounts, the terminal can also automatically delete the information of the target accounts stored locally. Then, when a user opens the target application once again, his account is already in a logout state. The previously stored information of the target account is invisible to the user, and the account name and password are required to be input again to log in the target account.

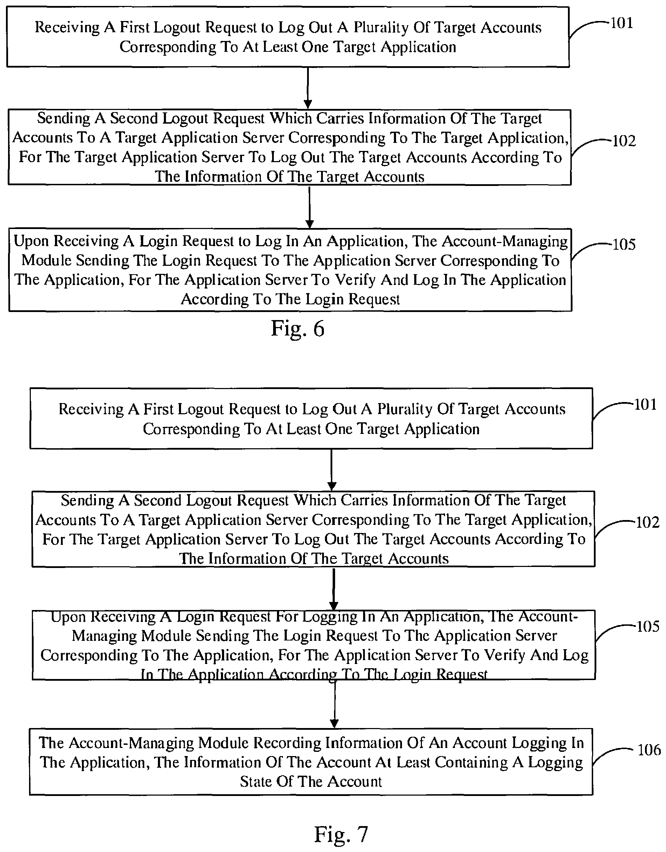

In the embodiment of the present invention, login states and logout states of all the accounts of the application are managed by the account-managing module, and the above described processes are to log out target accounts. To log in the application, as shown in Fig. 6 which is a flow chart illustrating another method for managing accounts based on the embodiment shown in Fig. 1, the method for managing accounts can include the following steps.

At step 105, upon receiving a login request to log in an application, the account-managing module sends the login request to the application server corresponding to the application, for the application server to verify the information of the target account and log in the application according to the login request.

At this step, for a user to log in a target account of the application, the account name and password are required to be input in a login interface of the application. Further, the account-managing module can send the login request to the corresponding application server, for the application server to verify the information of the target account according to the login request. After the verification is passed, the application can be logged in.

In the embodiment of the present invention, as shown in Fig. 7 which is a flow chart illustrating another method for managing accounts based on the embodiment shown in Fig. 6, the method for managing accounts can include the following steps.

At step 106, the account-managing module records information of an account logging in the application, the information of the account at least containing a logging state of the account.

The account-managing module records information of the account logging in the application. In a particular embodiment, the information of the account at least contains: a name of an application, a name of the account, a password to log in, a URL address of an application server and a logging state (login or logout).

After a message of successfully logging in the target account is received from the application server, the logging state of the target account is modified as login.

In a particular embodiment, for the security of the user accounts, the account-managing module can encrypt the recorded information of the login target account such that other users cannot check the information of the login target account on the terminal.

In the above embodiment, after a first logout request to log out a plurality of target accounts is received, the terminal sends a second logout request which carries information of the target accounts associated with the target application to a target application server corresponding to the target application, for the target application server to log out the target accounts according to the information of the target accounts. The above process can quickly log out a plurality of target accounts, saving time for users and improving user experience.

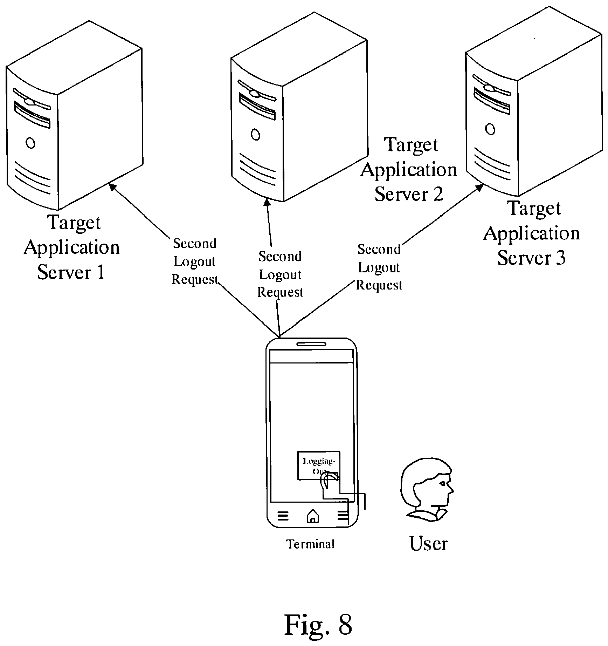

Fig. 8 is a flow chart illustrating a scenario for managing accounts according to an exemplary embodiment of the present invention, in which a user, a terminal and a target application server are involved.

As shown in Fig. 8, after the terminal receives a user initiated first logout request to log out a plurality of target accounts, the terminal sends a second logout request which carries information of the target accounts associated with the target application to a target application server corresponding to the target application. After the target application server receives the second logout request, the target application server logs out the target accounts according to the information of the target accounts. In a particular embodiment, the terminal can detect whether a button to log out in the logout interface of the target application or the logout interface corresponding to the account-managing module is selected, to determine whether the first logout request is received.

In the above embodiment, after the terminal detects a first logout request to log out a plurality of target accounts, the terminal sends a second logout request which carries information of the target accounts associated with the target application to the corresponding target application server. Finally, the target application server logs out the target accounts according to the information of the target accounts. In this way, time for the user to log out a plurality of target accounts can be saved, and user experience can be improved.

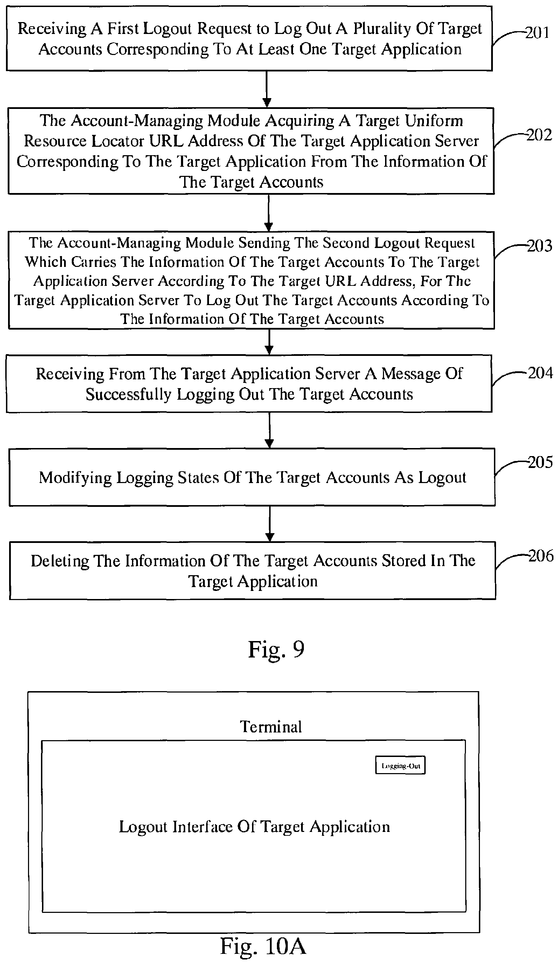

Fig. 9 is a flow chart illustrating another method for managing accounts according to an exemplary embodiment of the present invention, which involves a process to log out a plurality of target accounts. As shown in Fig. 9, the method includes the following steps.

At step 201, a first logout request to log out a plurality of target accounts corresponding to at least one target application is received.

In the embodiment of the present invention, login states and logout states of accounts for the corresponding application are managed by the account-managing module.

At this step, it can be detected whether a button to log out in the logout interface of the target application is selected, as shown in Fig. 10A. Upon detection of the selection of the button to log out, it can be determined that a first application logout request is received. The account-managing module is informed about the target account corresponding to the first application logout request.

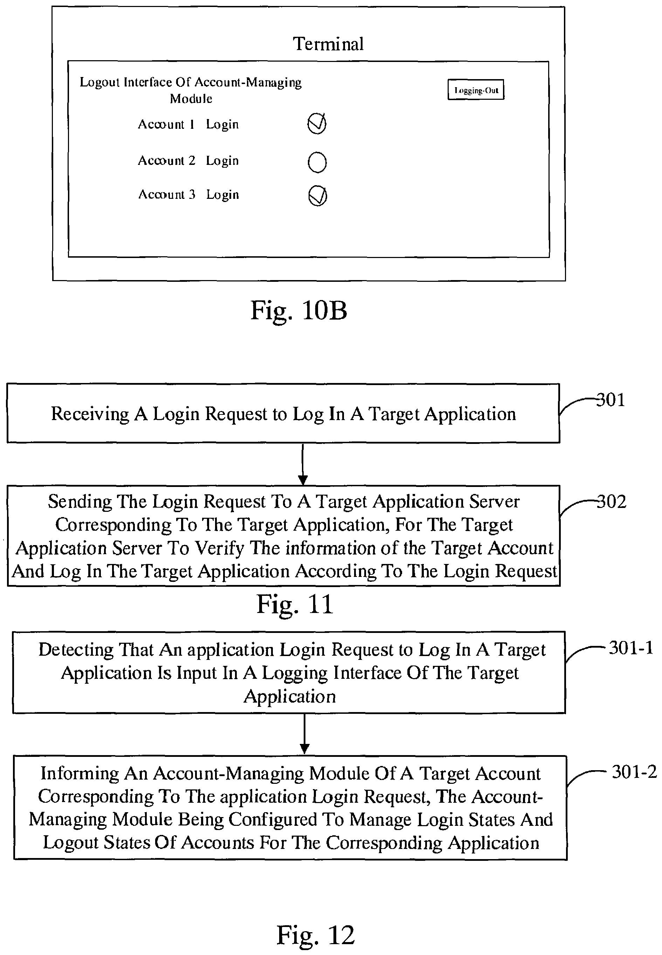

Alternatively, an account information list can be displayed on a logout interface corresponding to the account-managing module, for the user to select one or more target accounts from the account information list. Then, it is detected whether a button to log out in the logout interface is selected, as shown in Fig. 10B. If the button is selected, it can be determined that a first list logout request is received.

At step 202, the account-managing module acquires a URL address of the target application server corresponding to the target application from the information of the target accounts.

In a particular embodiment, information of an account can include at least: a name of an application, a name of the account, a password to log in, a URL address of an application server and a logging state (logging in or logging out). Since the account-managing module previously recorded the information of the target accounts when the target accounts are logged in, at this time, the target URL address of the corresponding target application server can be directly acquired from the information of the target accounts.

At step 203, the account-managing module sends the second logout request which carries the information of the target accounts to the target application server according to the target URL address, for the target application server to log out the target accounts according to the information of the target accounts.

At this step, the account-managing module can, according to the acquired target URL address, send the second logout request which carries the information of the target accounts to the target application server, to log out the corresponding target accounts.

At step 204, a message of successfully logging out the target accounts is received from the target application server.

After the target application server successfully logs out the target accounts according to the received information of the target accounts, the target application server can return a message of successfully logging out the target accounts to the terminal.

At step 205, logging states of the target accounts are modified as logout.

At this step, the terminal can modify the recorded logging states as logout.

At step 206, the information of the target accounts stored in the target application is deleted.

At this step, the terminal automatically deletes the information of the target accounts stored locally in the target application. If the user lends the terminal to another user, when the other user enters the target application again, it is already in a logout state. Then, the other user cannot see the information of the target account stored previously, and he is required to enter again the account name and password to log in the target account. Thereby, it can ensure the security of the information of the account.

In the above embodiment, after it is detected that a first application logout request or a first account application request to log out a plurality of target accounts is input either in a logout interface of the target application or in a logout interface corresponding to the account-managing module, the account-managing module acquires the target URL address from the information of the target accounts, and sends a second logout request which carries the information of the target accounts to the target application server according to the target URL address, for the target application server to log out the target accounts. The above process is convenient and fast to log out a plurality of target accounts, and thus can provide excellent user experience. Upon receiving from the target application server a message of successfully logging out the target accounts, the terminal can automatically modify logging states of the target accounts as logout, and also can delete the information of the target accounts stored in the target application. Thereby, it can ensure the security of the user information and improve the user experience.

The above process is to log out a plurality of target accounts. The embodiment of the present invention also provides a process to log in a single target account. As shown in Fig. 11, which is a flow chart illustrating another method for managing accounts according to an exemplary embodiment of the present invention, the method includes the following steps.

At step 301, a login request to log in a target application is received.

In a particular embodiment, as shown in Fig. 12, which shows another method for managing accounts based on the embodiment shown in Fig. 11, step 301 can also include the following substeps.

At substep 301-1, it is detected that an application login request to log in a target application is input in a logging interface of the target application.

At this substep, the terminal can detect whether an application login request is input in a logging interface of the target application by utilizing related technology. In a particular embodiment, it can be detected whether a login button in the logging interface is selected. When it is detected that the login button is selected, it can be determined that the application login request is received.

At substep 301-2, an account-managing module is informed about a target account corresponding to the application login request, the account-managing module being configured to manage login states and logout states of accounts for the corresponding application.

The terminal acquires the target account corresponding to the application login request input by the user. Since in the embodiment of the present invention, the login states and logout states of the accounts of the application are managed by the account-managing module, the terminal can inform the account-managing module of the target account corresponding to the application login request after the terminal acquires the application login request.

At step 302, the login request is sent to a target application server corresponding to the target application, for the target application server to verify the information of the target account and log in the target application according to the login request.

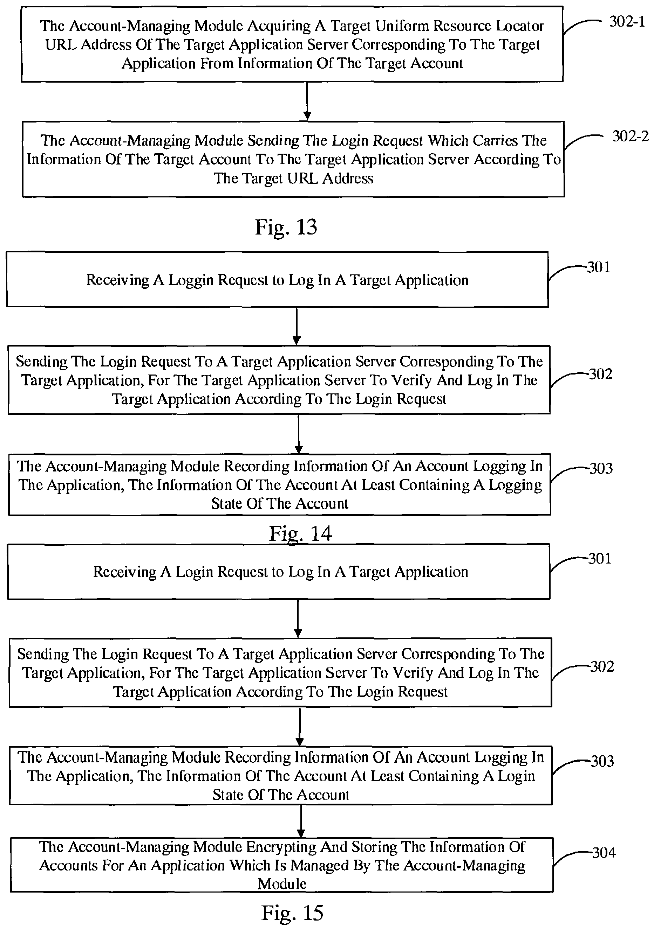

In a particular embodiment, as shown in Fig. 13, which shows another method for managing accounts based on the embodiment shown in Fig. 11, step 302 can also include the following substeps.

At substep 302-1, the account-managing module acquires a target URL address of the target application server corresponding to the target application from information of the target account.

At this substep, the account-managing module can acquire the target URL address of the target application server from the information of the target account.

At substep 302-2, the account-managing module sends the login request which carries the information of the target account to the target application server according to the target URL address.

At this step, the account-managing module sends the login request which carries the information of the target account to the target application server according to the target URL address, for the application server to verify the information of the target account and log in the target application according to the login request.

In a particular embodiment, as shown in Fig. 14, which shows another method for managing accounts based on the embodiment shown in Fig. 11, the method for managing accounts can also include the following steps.

At step 303, the account-managing module records information of an account logging in the application, the information of the account at least containing a logging state of the account.

At this step, the account-managing module can record information of the accounts of all the logged applications in an account information list. The account information includes at least information about login states.

In a particular embodiment, as shown in Fig. 15, which shows another method for managing accounts based on the embodiment shown in Fig. 14, the method for managing accounts can also include the following steps.

At step 304, the account-managing module encrypts and stores the information of accounts for an application which is managed by the account-managing module.

In order to ensure the security of user information, in a particular embodiment, the account-managing module can encrypt and store the information of accounts for the application which is managed by the account-managing module.

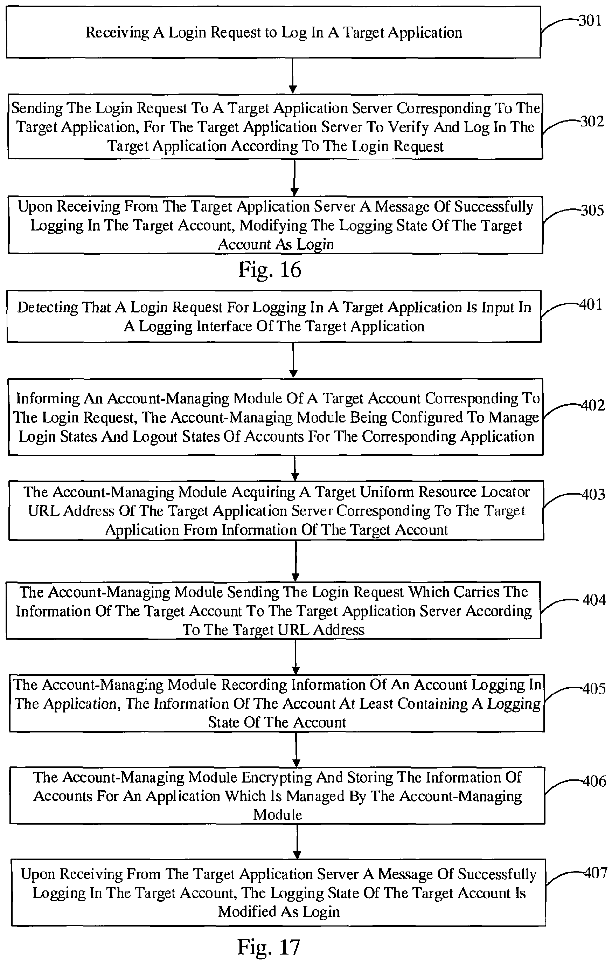

In a particular embodiment, as shown in Fig. 16, which shows another method for managing accounts based on the embodiment shown in Fig. 11, the method for managing accounts can also include the following steps.

At step 305, upon receiving from the target application server a message of successfully logging in the target account, the logging state of the target account is modified as login.

At this step, upon receiving a message of successfully logging in the target account, the account-managing module modifies the recorded logging state of the target account as login.

In the above embodiment, in order to log in a single application, the account-managing module maintains all the account information, for subsequently logging out a plurality of target accounts. Thereby, it can improve the efficiency of account management, can save time for quickly logging out a plurality of accounts, and can improve the user experience.

Fig. 17 is a flow chart illustrating another method for managing accounts according to an exemplary embodiment of the present invention, which describes a process to log in a single account. The method includes the following steps.

At step 401, it is detected that an application login request to log in a target application is input in a logging interface of the target application.

At this step, the user can open the logging interface of the target application, and input the required account name and password in the logging interface. After the account name and password are input, the user can click the logging button. The terminal detects that the logging button is selected, and then can determine that an application login request is received.

At step 402, an account-managing module is informed about a target account corresponding to the application login request, the account-managing module being configured to manage login states and logout states of accounts for the corresponding application.

The terminal acquires the target account corresponding to the application login request input by the user. Since in the embodiment of the present invention, the login states and logout states of the accounts of the application are managed by the account-managing module, the terminal can inform the account-managing module of the target account corresponding to the application login request after the terminal acquires the application login request.

At step 403, the account-managing module acquires a target URL address of the target application server corresponding to the target application from information of the target account.

At this step, the account-managing module can acquire the target URL address of the target application server from the information of the target account.

At step 404, the account-managing module sends the login request which carries the information of the target account to the target application server according to the target URL address.

At this step, the account-managing module sends the login request which carries the information of the target account to the target application server according to the target URL address, for the target application server to verify the information of the target account and log in the target application according to the login request.

At step 405, the account-managing module records information of an account logging in the application, the information of the account at least containing a logging state of the account.

At this step, the account-managing module can record information of the accounts of all the logged applications in an account information list. The account information includes at least information about loggings states.

At step 406, the account-managing module encrypts and stores the information of accounts for an application which is managed by the account-managing module.

In order to ensure the security of user information, in a particular embodiment, the account-managing module can encrypt and store the information of accounts for the application which is managed by the account-managing module.

At step 407, upon receiving from the target application server a message of successfully logging in the target account, the logging state of the target account is modified as login.

At this step, upon receiving a message of successfully logging in the target account, the account-managing module modifies the recorded logging state of the target account as login.

In the above embodiment, after the terminal receives a login request to log in the target application, the account-managing module sends the login request to the corresponding target application server, for the target application server to verify the information of the target account and log in the target application. In addition, information of the target account is recorded in the account-managing module, therefore the account-managing module can maintain information of all accounts. Thereby, it can improve the efficiency of account management, can save time for quickly logging out a plurality of accounts for subsequent users, and can improve the user experience.

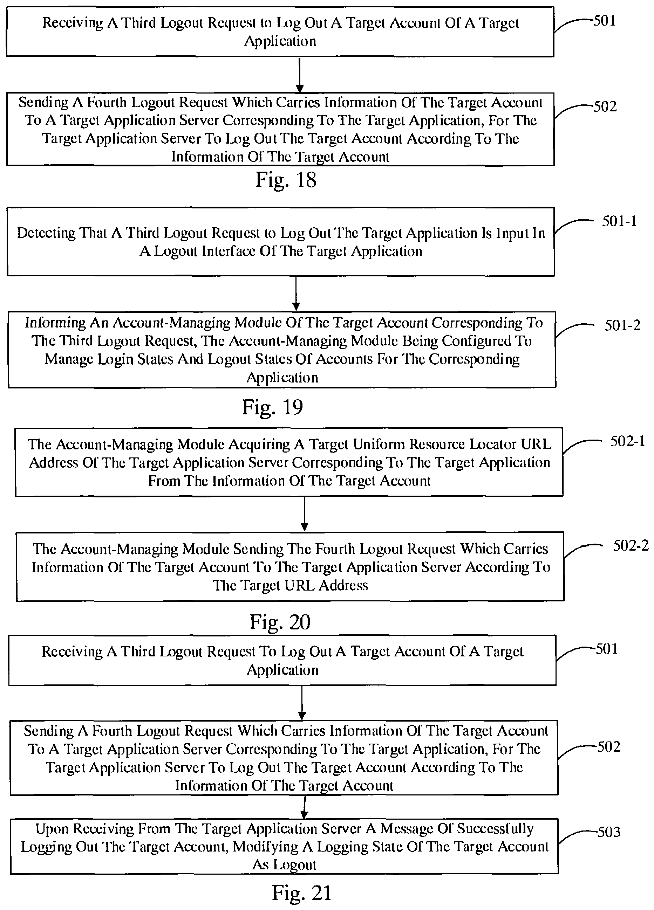

The embodiment of the present invention also provides a process to log out a single target account. Fig. 18 is a flow chart illustrating another method for managing accounts according to an exemplary embodiment of the present invention. As shown in Fig. 18, the method includes the following steps.

At step 501, a third logout request to log out a target account of a target application is received.

In a particular embodiment, as shown in Fig. 19, which illustrates another method for managing accounts based on the embodiment as shown in Fig. 18, step 501 can include the following substeps.

At substep 501-1, it is detected that a third application logout request to log out the target application is input in a logout interface of the target application.

At this substep, after the terminal already logs in the target account of the target application, the terminal can detect whether a third application logout request is input in a logout interface corresponding to the target application. In a particular embodiment, it can be detected whether a logout button in the logout interface of the target application is selected. If the logout button is selected, it can be determined that the third application logout request is detected.

At substep 501-2, an account-managing module is informed about the target account corresponding to the third application logout request, the account-managing module being configured to manage login states and logout states of accounts for the corresponding application.

In the embodiment of the present invention, the account-managing module manages the login states and logout states of accounts for the corresponding application. After the terminal detects the third application logout request, the terminal can inform the account-managing module of the target account which has logged in the target application.

At step 502, a fourth logout request which carries information of the target account is sent to a target application server corresponding to the target application, for the target application server to log out the target account according to the information of the target account.

Fig. 20 illustrates another method for managing accounts based on the embodiment as shown in Fig. 18. As shown in Fig. 20, step 502 can include the following substeps.

At substep 502-1, the account-managing module acquires a target Uniform Resource Locator URL address of the target application server corresponding to the target application from the information of the target account.

Since the account-managing module previously recorded the information of the target account, at this time, the account-managing module can acquire the target URL address of the corresponding target application server from the information of the target account.

At substep 502-2, the account-managing module sends the fourth logout request which carries information of the target account to the target application server according to the target URL address.

At this substep, the account-managing module can send the fourth logout request which carries information of the target account to the target application server according to the acquired target URL address, for the target application server to log out the corresponding target account according to the information of the target account.

In the embodiment of the present invention, as shown in Fig. 21 which illustrates another method for managing accounts based on the embodiment as shown in Fig. 18, the method for managing accounts can also include the following steps.

At step 503, upon receiving from the target application server a message of successfully logging out the target account, a logging state of the target account is modified as logout.

At this step, after the target application server successfully logs out the target account according to the received information of the target account, the target application server will return a message of successfully logging out the target account to the terminal. Then, the terminal can modify the recorded logging state of the target account as logging out. Thereby, the account-managing module can manage the information of the target account in real time.

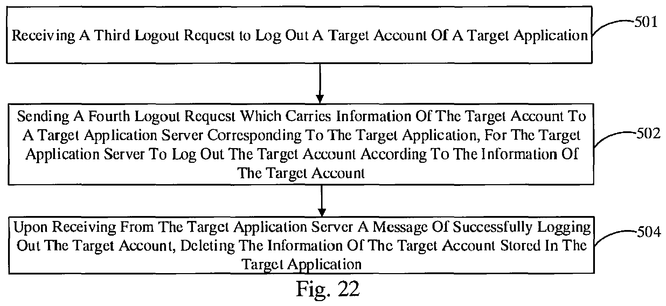

In the embodiment of the present invention, as shown in Fig. 22 which illustrates another method for managing accounts based on the embodiment as shown in Fig. 18, the method for managing accounts can also include the following steps.

At step 504, upon receiving from the target application server a message of successfully logging out the target account, the information of the target account stored in the target application is deleted.

At this step, after the terminal receives from the target application server the message of successfully logging out the target account, the terminal can also automatically delete the information of the target accounts stored locally. Then, when a user opens the target application once again, his account is already in a logout state. The previously stored information of the target account is invisible to the user, and the account name and password are required to be input again to log in the target account.

In the above embodiment, in order to log out a single application, the account-managing module maintains information of all accounts. Thereby, it can improve the efficiency of account management, can save time for quickly logging out a plurality of accounts, and can improve the user experience.

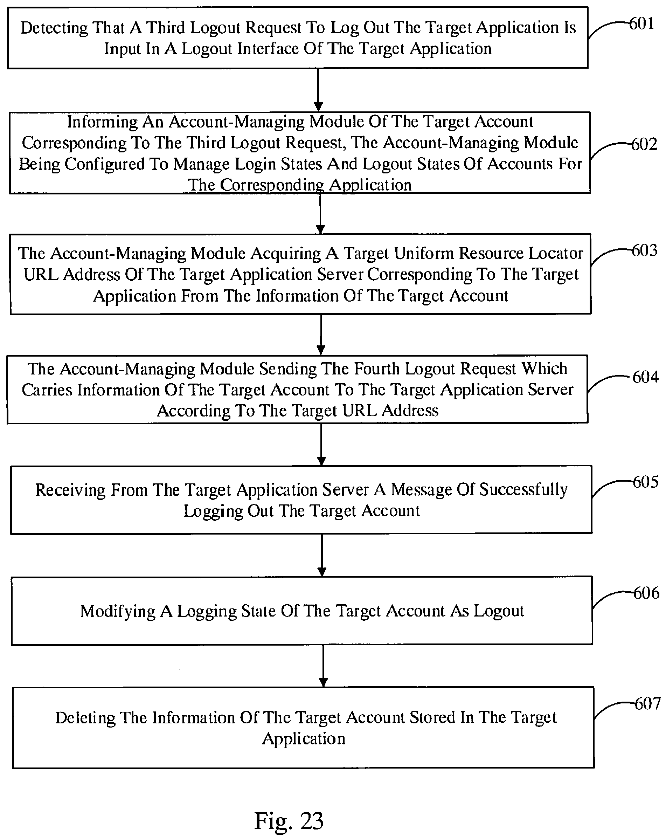

Fig. 23 is a flow chart illustrating another method for managing accounts according to an exemplary embodiment of the present invention, which describes a process of logging out a single account. The method includes the following steps.

At step 601, it is detected that a third application logout request to log out the target application is input in a logout interface of the target application.

At this step, after the terminal already logs in the target account of the target application, the terminal can detect whether a third applicationlogout request is input in a logout interface corresponding to the target application. In a particular embodiment, it can be detected whether a logout button in the logout interface of the target application is selected. If the logout button is selected, it can be determined that the third applicationlogout request is detected.

At step 602, an account-managing module is informed about the target account corresponding to the third application logout request, the account-managing module being configured to manage login states and logout states of accounts for the corresponding application.

In the embodiment of the present invention, the account-managing module manages the login states and logout states of accounts for the corresponding application. After the terminal detects the third application logout request, the terminal can inform the account-managing module of the target account which has logged in the target application.

At step 603, the account-managing module acquires a target URL address of the target application server corresponding to the target application from the information of the target account.

Since the account-managing module previously recorded the information of the target account, at this time, the account-managing module can acquire the target URL address of the corresponding target application server from the information of the target account.

At step 604, the account-managing module sends the fourth logout request which carries information of the target account to the target application server according to the target URL address.

At this step, the account-managing module can send the fourth logout request which carries information of the target account to the target application server according to the acquired target URL address, for the target application server to log out the corresponding target account according to the information of the target account.

At step 605, a message of successfully logging out the target account is received from the target application server.

After the target application server successfully logs out the target account, the target application server returns a message of successfully logging out the target account to the terminal.

At step 606, a logging state of the target account is modified as logout.

At this step, the account-managing module can modify the logging state of the target account, in the previously recorded information of the target account, from login to logout.

At step 607, the information of the target account stored in the target application is deleted.

At this step, the information of the target account stored in the target application is deleted. Then, when a user opens the target application once again, his account is already in a logout state. The previously stored information of the target account is invisible to the user, and the account name and password are required to be input again to log in the target account, which ensures security of the information of the users.

In the above embodiment, after the terminal receives the third logout request to log out the target account, the information of the target account can be acquired from the account-managing module according to the name of the target account. Then, the account-managing module sends the fourth logout request to the target application server according to the target URL address in the information of the target account. Thereby, the terminal can maintain the information of all accounts, improving the effectiveness of the account management and improving the user experience.

Corresponding to the above embodiments regarding methods for managing accounts, the present invention also provides embodiments regarding devices for managing accounts.

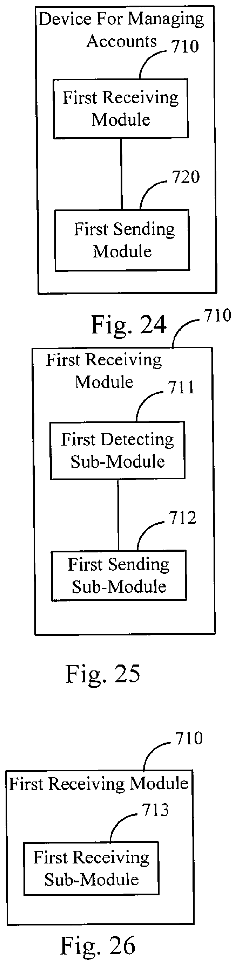

As shown in Fig. 24, which is a block diagram illustrating a device for managing accounts according to an exemplary embodiment of the present invention, the device includes a first receiving module 710 and a first sending module 720.

In the embodiment, the first receiving module 710 is configured to receive a first logout request to log out a plurality of target accounts corresponding to at least one target application; and
the first sending module 720 is configured to, for each target application, send a second logout request which carries information of the target accounts associated with the target application to a target application server corresponding to the target application, for the target application server to log out the target accounts according to the information of the target accounts.

As shown in Fig. 25, which is a block diagram illustrating another device for managing accounts according to an exemplary embodiment of the present invention, based on the above embodiment as shown in Fig. 24, the first receiving module 710 includes: a first detecting sub-module 711 and a first sending sub-module 712.

In the embodiment, the first detecting sub-module 711 is configured to, for each target application, detect that a first application logout request to log out the target application is input in a logout interface of the target application; and
the first sending sub-module 712 is configured to inform an account-managing module of the target accounts corresponding to the first application logout request, the account-managing module being configured to manage login states and logout states of accounts for the corresponding application.

As shown in Fig. 26, which is a block diagram illustrating another device for managing accounts according to an exemplary embodiment of the present invention, based on the above embodiment as shown in Fig. 24, the first receiving module 710 includes: a first receiving sub-module 713.

In the embodiment, the first receiving sub-module 713 is configured to, for each target application, receive a first account logout request input in a logout interface corresponding to an account-managing module, the account-managing module being configured to manage login states and logout states of accounts for the corresponding application.

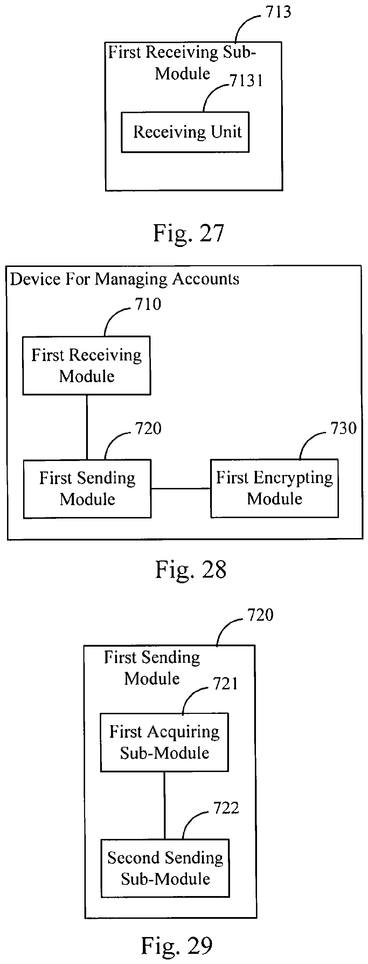

As shown in Fig. 27, which is a block diagram illustrating another device for managing accounts according to an exemplary embodiment of the present invention, based on the above embodiment as shown in Fig. 26, the first receiving sub-module 713 includes: a receiving unit 7131.

In the embodiment, the receiving unit 7131 is configured to receive a first list logout request by detecting that one or more target accounts are selected from an account information list of the account-managing module, the account information list containing previously recorded information of all logged-in accounts.

As shown in Fig. 28, which is a block diagram illustrating another device for managing accounts according to an exemplary embodiment of the present invention, based on the above embodiment as shown in Fig. 27, the device further includes: a first encrypting module 730.

In the embodiment, the first encrypting module 730 is configured for the account-managing module to encrypt and store the information of accounts for an application which is managed by the account-managing module.

As shown in Fig. 29, which is a block diagram illustrating another device for managing accounts according to an exemplary embodiment of the present invention, based on any of the above embodiments as shown in Figs. 24-28, the first sending module 720 includes: a first acquiring sub-module 721 and a second sending sub-module 722.

In the embodiment, the first acquiring sub-module 721 is configured for the account-managing module to acquire a target URL address of the target application server corresponding to the target application from the information of the target accounts; and
the second sending sub-module 722 is configured for the account-managing module to send the second logout request which carries the information of the target accounts to the target application server according to the target URL address.

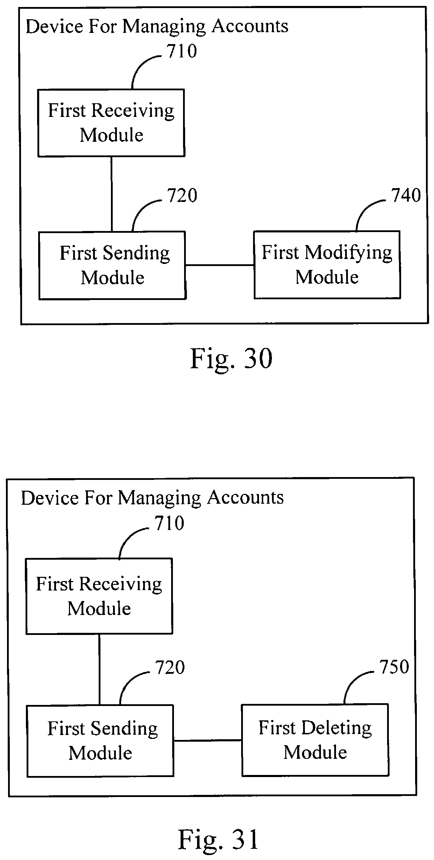

As shown in Fig. 30, which is a block diagram illustrating another device for managing accounts according to an exemplary embodiment of the present invention, based on the above embodiment as shown in Fig. 24, the device further includes: a first modifying module 740.

In the embodiment, the first modifying module 740 is configured to, upon receiving from the target application server a message of successfully logging out the target accounts, modify logging states of the target accounts as logout.

As shown in Fig. 31, which is a block diagram illustrating another device for managing accounts according to an exemplary embodiment of the present invention, based on the above embodiment as shown in Fig. 24, the device further includes: a first deleting module 750.

In the embodiment, the first deleting module 750 is configured to, upon receiving from the target application server a message of successfully logging out the target accounts, delete the information of the target accounts stored in the target application.

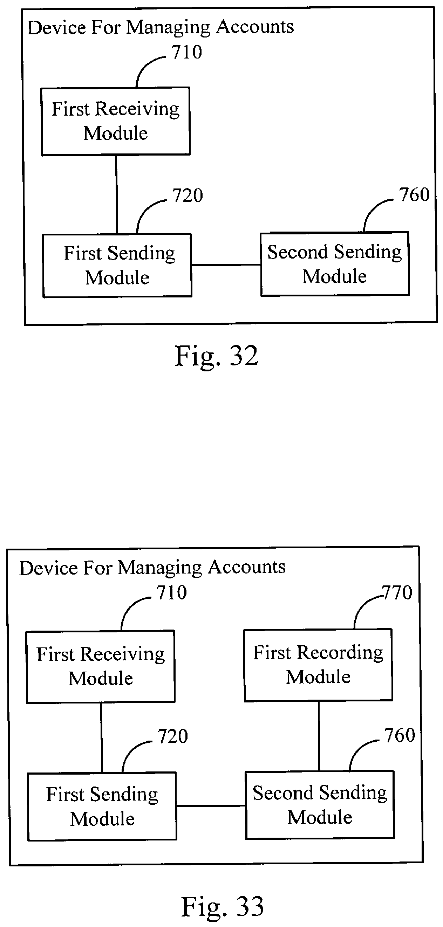

As shown in Fig. 32, which is a block diagram illustrating another device for managing accounts according to an exemplary embodiment of the present invention, based on the above embodiment as shown in Fig. 24, the device further includes: a second sending module 760.

In the embodiment, the second sending module 760 is configured for the account-managing module, upon receiving a login request to log in an application, to send the login request to the application server corresponding to the application, for the application server to verify the information of the target account and log in the application according to the login request.

As shown in Fig. 33, which is a block diagram illustrating another device for managing accounts according to an exemplary embodiment of the present invention, based on the above embodiment as shown in Fig. 32, the device further includes: a first recording module 770.

In the embodiment, the first recording module 770 is configured for the account-managing module to record information of an account logging in the application, the information of the account at least containing a logging state of the account.

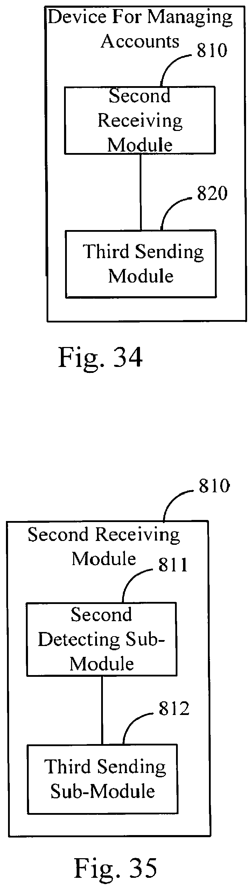

As shown in Fig. 34, which is a block diagram illustrating another device for managing accounts according to an exemplary embodiment of the present invention, the device includes: a second receiving module 810 and a third sending module 820.

In the embodiment, the second receiving module 810 is configured to receive a login request to log in a target application; and
the third sending module 820 is configured to send the login request to a target application server corresponding to the target application, for the target application server to verify the information of the target account and log in the target application according to the login request.

As shown in Fig. 35, which is a block diagram illustrating another device for managing accounts according to an exemplary embodiment of the present invention, based on the above embodiment as shown in Fig. 34, the second receiving module 810 includes: a second detecting sub-module 811 and a third sending sub-module 812.

In the embodiment, the second detecting sub-module 811 is configured to detect that an application login request to log in a target application is input in a logging interface of the target application; and
the third sending sub-module 812 is configured to inform an account-managing module of a target account corresponding to the application login request, the account-managing module being configured to manage login states and logout states of accounts for the corresponding application.

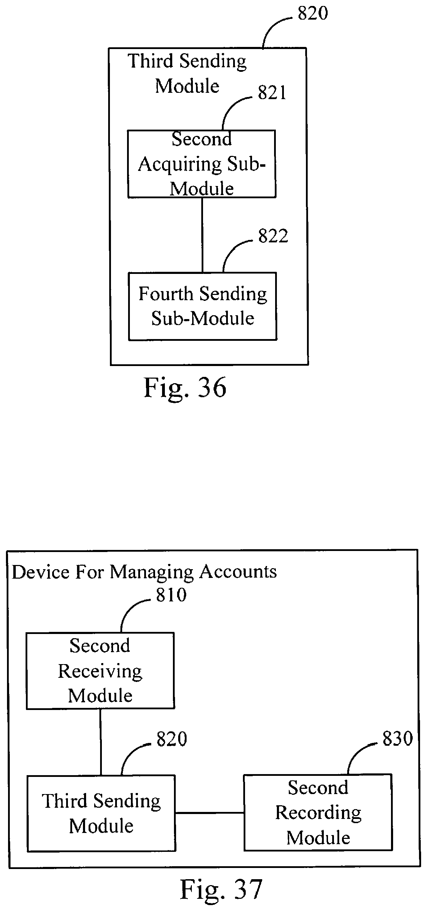

As shown in Fig. 36, which is a block diagram illustrating another device for managing accounts according to an exemplary embodiment of the present invention, based on the above embodiment as shown in Fig. 34 or Fig. 35, the third sending module 820 includes: a second acquiring sub-module 821 and a fourth sending sub-module 822.

In the embodiment, the second acquiring sub-module 821 is configured for the account-managing module to acquire a target URL address of the target application server corresponding to the target application from information of the target account; and
the fourth sending sub-module 822 is configured for the account-managing module to send the login request which carries the information of the target account to the target application server according to the target URL address.

As shown in Fig. 37, which is a block diagram illustrating another device for managing accounts according to an exemplary embodiment of the present invention, based on the above embodiment as shown in Fig. 34, the device further includes: a second recording module 830.

In the embodiment, the second recording module 830 is configured for the account-managing module to record information of an account logging in the application, the information of the account at least containing a logging state of the account.

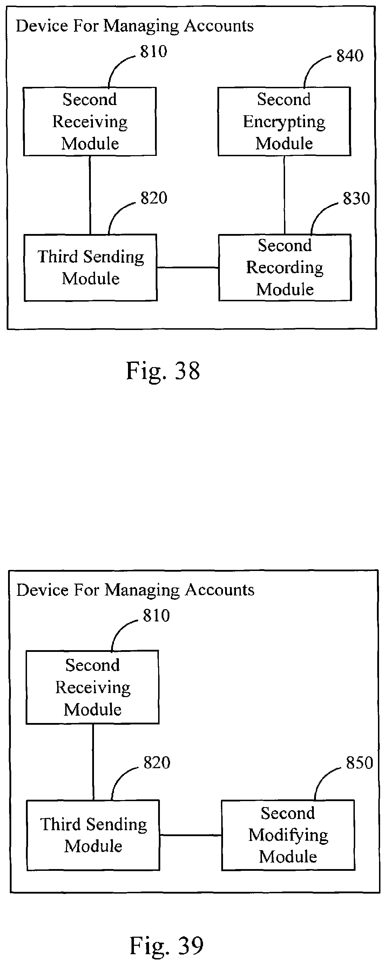

As shown in Fig. 38, which is a block diagram illustrating another device for managing accounts according to an exemplary embodiment of the present invention, based on the above embodiment as shown in Fig. 37, the device further includes: a second encrypting module 840.

In the embodiment, the second encrypting module 840 is configured for the account-managing module to encrypt and store the information of accounts for an application which is managed by the account-managing module.

As shown in Fig. 39, which is a block diagram illustrating another device for managing accounts according to an exemplary embodiment of the present invention, based on the above embodiment as shown in Fig. 34, the device further includes: a second modifying module 850.

In the embodiment, the second modifying module 850 is configured to, upon receiving from the target application server a message of successfully logging in the target account, modify the logging state of the target account as login.

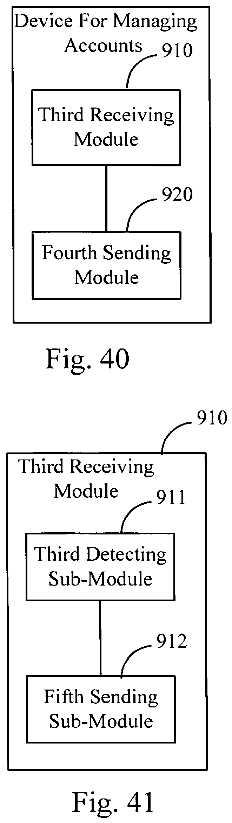

As shown in Fig. 40, which is a block diagram illustrating another device for managing accounts according to an exemplary embodiment of the present invention, a device for managing accounts, the device includes: a third receiving module 910 and a fourth sending module 920.

In the embodiment, the third receiving module 910 is configured to receive a third logout request to log out a target account of a target application; and
the fourth sending module 920 is configured to send a fourth logout request which carries information of the target account to a target application server corresponding to the target application, for the target application server to log out the target account according to the information of the target account.

As shown in Fig. 41, which is a block diagram illustrating another device for managing accounts according to an exemplary embodiment of the present invention, based on the above embodiment as shown in Fig. 40, the third receiving module 910 includes: a third detecting sub-module 911 and a fifth sending sub-module 912.

In the embodiment, the third detecting sub-module 911 is configured to detect that a third application logout request to log out the target application is input in a logout interface of the target application; and
the fifth sending sub-module 912 is configured to inform an account-managing module of the target account corresponding to the third application logout request, the account-managing module being configured to manage login states and logout states of accounts for the corresponding application.

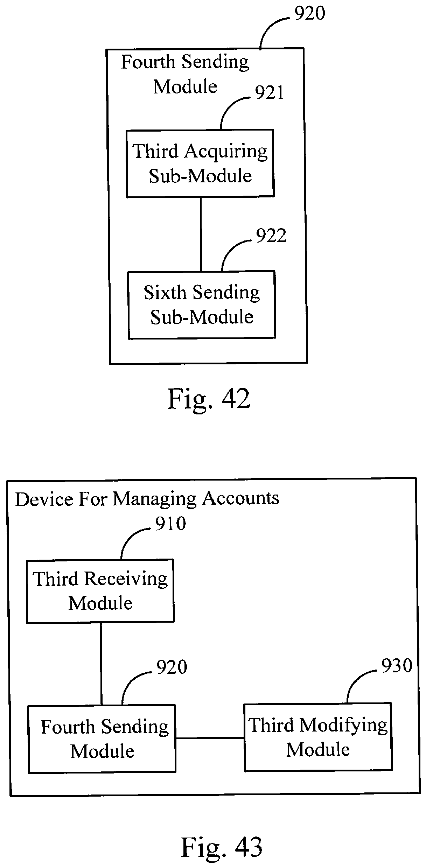

As shown in Fig. 42, which is a block diagram illustrating another device for managing accounts according to an exemplary embodiment of the present invention, based on the above embodiment as shown in Fig. 40 or Fig. 41, the fourth sending module 920 includes: a third acquiring sub-module 921 and a sixth sending sub-module 922.

In the embodiment, the third acquiring sub-module 921 is configured for the account-managing module to acquire a target URL address of the target application server corresponding to the target application from the information of the target account; and
the sixth sending sub-module 922 is configured for the account-managing module to send the fourth logout request which carries information of the target account to the target application server according to the target URL address.

As shown in Fig. 43, which is a block diagram illustrating another device for managing accounts according to an exemplary embodiment of the present invention, based on the above embodiment as shown in Fig. 40, the device further includes: a third modifying module 930.

In the embodiment, the third modifying module 930 is configured to, upon receiving from the target application server a message of successfully logging out the target account, modify a logging state of the target account as logout.

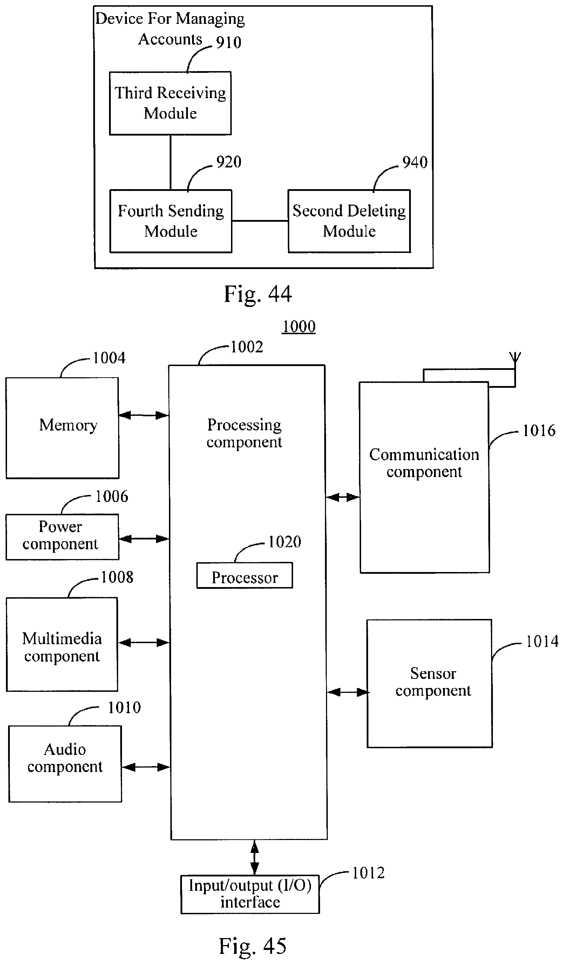

As shown in Fig. 44, which is a block diagram illustrating another device for managing accounts according to an exemplary embodiment of the present invention, based on the above embodiment as shown in Fig. 40, the device further includes: a second deleting module 940.

In the embodiment, the second deleting module 940 is configured to, upon receiving from the target application server a message of successfully logging out the target account, delete the information of the target account stored in the target application.

With respect to the devices in the above embodiments, the specific manners for performing operations for individual modules, sub-modules or units have been described in detail in the embodiments regarding the relevant methods, which will not be elaborated herein.

Correspondingly, the present invention also provides a device for managing accounts, including:
a processor; and
a memory for storing instructions executable by the processor;
wherein the processor is configured to perform:
receiving a first logout request to log out a plurality of target accounts corresponding to at least one target application; and
for each target application, sending a second logout request which carries information of the target accounts associated with the target application to a target application server corresponding to the target application, for the target application server to log out the target accounts according to the information of the target accounts.

Correspondingly, the present invention also provides a device for managing accounts, including:
a processor; and
a memory for storing instructions executable by the processor;
wherein the processor is configured to perform:
receiving a login request to log in a target application; and
sending the login request to a target application server corresponding to the target application, for the target application server to verify the information of the target account and log in the target application according to the login request.

Correspondingly, the present invention also provides a device for managing accounts, including:
a processor; and
a memory for storing instructions executable by the processor;
wherein the processor is configured to perform:
receiving a third logout request to log out a target account of a target application; and
sending a fourth logout request which carries information of the target account to a target application server corresponding to the target application, for the target application server to log out the target account according to the information of the target account.

Fig. 45 is a block diagram of a device 1000 for managing accounts according to an exemplary embodiment. For example, the device 1000 can be a terminal, and the terminal can specifically be a mobile phone, a computer, a digital broadcast terminal, a messaging device, a smart socket, a smart sphygmomanometer, a gaming console, a tablet, a medical device, exercise equipment, a personal digital assistant, and the like.

Referring to Fig. 45, the device 1000 can include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 can include one or more processors 1020 to execute instructions to perform all or part of the steps in the above described methods. Moreover, the processing component 1002 can include one or more modules which facilitate the interaction between the processing component 1002 and other components. For instance, the processing component 1002 can include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 can include a power management system, one or more power sources, and any other components associated with the generation, management, and distribution of power in the device 1000.

The multimedia component 1008 includes a screen providing an output interface between the device 1000 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 1008 includes a front camera and/or a rear camera. The front camera and the rear camera can receive an external multimedia datum while the device 1000 is in an operation mode, such as a photographing mode or a video mode. Each of the front camera and the rear camera can be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal can be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons can include, but are not limited to, a home button, a volume button, a starting button, and a locking button.

The sensor component 1014 includes one or more sensors to provide status assessments of various aspects of the device 1000. For instance, the sensor component 1014 can detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 can include a proximity sensor configured to detect the presence of nearby objects without any physical contact. The sensor component 1014 can also include a light sensor, such as a CMOS or CCD image sensor, for use in imaging applications. In some embodiments, the sensor component 1014 can also include an accelerometer sensor, a gyroscope sensor, a magnetic sensor, a pressure sensor, a microwave sensor or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1004, executable by the processor 1020 in the device 1000, for performing the above-described methods. For example, the non-transitory computer-readable storage medium can be a ROM, a RAM, a CD-ROM, a magnetic tape, a floppy disc, an optical data storage device, and the like.

## Claims

1. A method for managing accounts, comprising the followings steps:
- receiving (101, 201) a first logout request to log out a plurality of target accounts corresponding to at least one target application; and
- for each target application, sending (102) a second logout request which carries information of the target accounts associated with this target application to a target application server corresponding to the target application, for the target application server to log out the target accounts according to the information of the target accounts.

2. The method of claim 1, wherein the step of receiving (101, 201) a first logout request to log out a plurality of target accounts comprises:
- for each target application, detecting (101-1) that a first application logout request to log out the target application is input in a logout interface of the target application; and
- informing (101-2) an account-managing module of the target accounts corresponding to the first application logout request, the account-managing module being configured to manage login states and logout states of accounts for the corresponding application.

3. The method of claim 1, wherein the step of receiving (101, 201) a first logout request to log out a plurality of target accounts comprises:
for each target application, receiving (101-1') a first account logout request input in a logout interface corresponding to an account-managing module, the account-managing module being configured to manage login states and logout states of accounts for the corresponding application.

4. The method of claim 2 or 3, wherein the method further comprises:
the account-managing module encrypting and storing the information of accounts for an application which is managed by the account-managing module.

5. The method of any one of claims 1 to 4, wherein the method further comprises:
upon receiving (204) from the target application server a message of successfully logging out the target accounts, modifying (103, 205) the logging states of the target accounts as logout.

6. The method of any one of claims 1 to 5, wherein the method further comprises:
upon receiving (204) from the target application server a message of successfully logging out the target accounts, deleting (104, 206) the information of the target accounts stored in the target application.

7. The method of any one of claims 1 to 6, wherein the method further comprises:
upon receiving a login request to log in an application, the account-managing module sending (105) the login request to the application server corresponding to the application, for the application server to verify the information of the target account and log in the application according to the login request.

8. A method for managing accounts, comprising the followings steps:
- receiving (301) a login request to log in a target application; and
- sending (302) the login request to a target application server corresponding to the target application, for the target application server to verify the information of the target account and log in the target application according to the login request.

9. The method of claim 8, wherein the step of receiving (301) a login request to log in a target account to a target application comprises:
- detecting (301-1) that an application login request to log in a target application is input in a logging interface of the target application; and
- informing (301-2) an account-managing module of a target account corresponding to the application login request, the account-managing module being configured to manage login states and logout states of accounts for the corresponding application.

10. A method for managing accounts, comprising the followings steps:
- receiving (501) a third logout request to log out a target account of a target application; and
- sending (502) a fourth logout request which carries information of the target account to a target application server corresponding to the target application, for the target application server to log out the target account according to the information of the target account.

11. The method of claim 10, wherein the step of receiving (501) a third logout request to log out a target account of a target application comprises:
- detecting (501-1) that a third application logout request to log out the target application is input in a logout interface of the target application; and
- informing (501-2) an account-managing module of the target account corresponding to the third application logout request, the account-managing module being configured to manage login states and logout states of accounts for the corresponding application.

12. A device for managing accounts, comprising:
- a first receiving module (710) configured to receive a first logout request to log out a plurality of target accounts corresponding to at least one target application; and
- a first sending module (720) configured to, for each target application, send a second logout request which carries information of the target accounts associated with this target application to a target application server corresponding to the target application, for the target application server to log out the target accounts according to the information of the target accounts.

13. The device of claim 12, wherein the first receiving module (710) comprises:
- a first detecting sub-module (711) configured to, for each target application, detect that a first application logout request to log out the target application is input in a logout interface of the target application; and
- a first sending sub-module (712) configured to inform an account-managing module of the target accounts corresponding to the first application logout request, the account-managing module being configured to manage login states and logout states of accounts for the corresponding application.

14. The device of claim 12, wherein the first receiving module (710) comprises:
a first receiving sub-module (713) configured to, for each target application, receive a first account logout request input in a logout interface corresponding to an account-managing module, the account-managing module being configured to manage login states and logout states of accounts for the corresponding application.

15. The device of claim 13 or 14, wherein the device further comprises:
a first encrypting module (730) configured for the account-managing module to encrypt and store the information of accounts for an application which is managed by the account-managing module.
